(19) Europäisches Patentamt
European Patent Office
Office européen des brevets

(11) **EP 1 902 812 B1**

(12) **EUROPÄISCHE PATENTSCHRIFT**

(45) Veröffentlichungstag und Bekanntmachung des Hinweises auf die Patenterteilung:
**13.01.2010 Patentblatt 2010/02**

(51) Int Cl.:
***B23K 26/24*** (2006.01)      ***B23K 26/28*** (2006.01)
***B64C 1/12*** (2006.01)

(21) Anmeldenummer: **07018361.1**

(22) Anmeldetag: **19.09.2007**

(54) **Metallisches Flugzeugbauteil**

Metal aircraft structural member

Elément métallique de structure d'avion

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **19.09.2006 DE 102006046080**

(43) Veröffentlichungstag der Anmeldung:
**26.03.2008 Patentblatt 2008/13**

(73) Patentinhaber: **Fraunhofer-Gesellschaft zur Förderung der angewandten Forschung e.V. 80686 München (DE)**

(72) Erfinder:
• **Dipl. -Ing. Dittrich, Dirk**
  **01309 Dresden (DE)**
• **Dr.-Ing Hackius, Jens**
  **28183 Bremen (DE)**
• **Prof. Brenner, Berndt**
  **01328 Dresden (DE)**
• **Dr. rer. nat. Winderlich, Bernd**
  **01217 Dresden (DE)**
• **Dr.-Ing. Standfuss, Jens**
  **01796 Dresden (DE)**

(74) Vertreter: **Pfenning, Meinig & Partner GbR Patent- und Rechtsanwälte An der Frauenkirche 20 01067 Dresden (DE)**

(56) Entgegenhaltungen:
EP-A- 1 081 042      DE-C1- 19 930 852
US-A1- 2005 210 819

**Beschreibung**

Die Erfindung betrifft metallische Flugzeugbauteile, die bevorzugt für Flugzeugstrukturen im Rumpfbereich eingesetzt werden können (siehe z.B. der EP-A-1 081 042). Für Flugzeugbauteile des Rumpfbereichs ist eine schadenstolerante Auslegung erforderlich. Bei Flugzeugbauteilen ist es üblich eine Schadenstoleranz zuzulassen. Dies bedeutet in Flugzeugbauteilen können in Folge von Belastungen ausgebildete Risse bis zu einer bestimmten Länge toleriert werden. Eine Risslänge darf dabei einen kritischen Wert zumindest bis zur nächsten Inspektion nicht überschreiten.

Dabei ist es üblich, an solchen Leichtbaustrukturen, bei denen zwischen Innen- und Außenseite Druckdifferenzen auftreten können, diese in Zylinderbauweise herzustellen. Hierfür werden Schalensegmente miteinander verbunden. Diese bestehen dann aus einem Aluminium-Hautblech, das in Längs- und Querrichtung mit Verstärkungsprofilen (Stringer, Spannten, Clips) versteift ist. Die Schalensegmente werden im Stumpfstoß durch Überlapp-Dopplerbleche mit einer Vielzahl von Nieten verbunden. Dadurch ergeben sich aber ein hoher Fertigungsaufwand und eine Erhöhung der Masse.

Es wurde daher in der Vergangenheit angestrebt, andere Fügetechnologien und hier insbesondere das Schweißen einzusetzen. Dem stehen aber bisher die besonderen Anforderungen im Flugzeugbau nach fehlerarmen Verbindungen entgegen. Dabei wirken sich die Veränderungen der Werkstoffeigenschaften durch den thermischen Schweißprozess nachteilig aus. Dies führt zu einer reduzierten statischen und dynamischen Festigkeit. Die Ermüdungsrissbildung verläuft schneller und auch die Ausbreitung von Rissen ist ungünstig, da sie häufig entlang einer Schweißnaht im negativ beeinflussten Werkstoff der Fügezone verlaufen und sich dabei leichter sowie schneller verlängern, als im thermisch unbeeinflussten Grundwerkstoff. Die in der Schweißnaht verlaufenden Risse können diese nicht in Richtung Grundwerkstoff verlassen. Die Rissfortschrittgeschwindigkeit in einer Schweißnaht ist folglich aus den vorab erläuterten Gründen deutlich größer als im Grundwerkstoff.

Die günstigen Werkstoffeigenschaften der üblicherweise eingesetzten Aluminiumlegierungen werden durch das Schweißen negativ beeinflusst und auch der Einsatz legierter Schweißzusatzwerkstoffe kann das Gefüge im Schweißnahtbereich mit seiner gussähnlichen Struktur nur begrenzt positiv beeinflussen.

Dies ist auch beim Laserstrahlschweißen der Fall, obwohl dabei weniger Wärme eingetragen wird, als bei anderen Schweißverfahren. Laserstrahlgeschweißte Stumpfstoßverbindungen erreichen dabei aber lediglich 70 bis 80% der statischen Festigkeit im Vergleich zum unbeeinflussten Grundwerkstoff.

Auftretende Ermüdungsrisse sollen aber eine solche Rissfortschrittgeschwindigkeit aufweisen, dass bei Rissbeginn unter einer gebrochenen Versteifung die vorgesehene Lebensdauer noch erreicht wird. Dies ist bei Nietverbindungen gegeben, da sich ein Riss im Grundwerkstoff ausbildet, dort ausbreitet und zusätzlich vorhandene Versteifungselemente als Rissstopper oder Rissverzögerer wirksam werden können. Dies ist aber bei Schweißverbindungen nicht der Fall.

Bekanntermaßen kann die Rissausbreitung ver- oder zumindest behindert werden, indem an einer Spitze eines Risses eine Bohrung ausgebildet wird. Eine solche Maßnahme kann jedoch erst nach Erkennen des Risses durchgeführt werden. Für sich schnell in einer Schweißnaht im Flugzeug ausbreitende Risse, würde diese drastische Verkürzung der Inspektionsintervalle erfordern, was erhöhte Kosten und ein unvertretbares Sicherheitsrisiko zur Folge hat.

Aus DE 100 09 305 A1 ist es bekannt, bei Rohrleitungen, die unter hohem Innendruck stehen, Rissstopp-Bandagen einzusetzen. Dies erhöht aber wieder den Fertigungsaufwand und auch die Masse. Eine solche technische Lösung kann in der beschriebenen Ausführung im Flugzeugbau aus gewichts- und aerodynamischen Gründen nicht eingesetzt werden.

Es ist daher Aufgabe der Erfindung, metallische Bauteile zur Verfügung zu stellen, bei denen Bleche durch Schweißnähte miteinander verbunden sind, die ein verbessertes Schadenstoleranz- bzw. Ermüdungsrissausbreitungsverhalten aufweisen.

Erfindungsgemäß wird diese Aufgabe mit einem Bauteil, das die Merkmale des Anspruchs 1 aufweist, gelöst. Vorteilhafte Ausgestaltungen und Weiterbildungen der Erfindung können mit in untergeordneten Ansprüchen bezeichneten Merkmalen erreicht werden.

Bei einem erfindungsgemäßen Flugzeugbauteil sind mindestens zwei Bleche mittels einer im Stumpfstoß ausgebildeten Schweißnaht verbunden. Die miteinander verbundenen Bleche weisen eine Randkontur auf, die die Fügelinie der Schweißnaht vorgeben. Die Randkontur der miteinander verbundenen Bleche, weisen einen von einer durchgängig geraden Linie abweichenden Verlauf auf, so dass die Gesamtlänge der Schweißnaht verlängert ist. Sie ist daher länger als eigentlich erforderlich. Außerdem sind an der Randkontur der Bleche periodische Richtungsänderungen vorhanden und die Randkonturen an den Blechen so ausgebildet, dass sie komplementär ineinander greifen. Die Ränder der Bleche liegen dabei im Schweißnahtbereich unmittelbar aneinander. Eine solche Ausbildung der Schweißnaht ist dabei zumindest über größere Bereiche nicht, zumindest jedoch nicht ausschließlich konstruktiv bedingt, um die Bleche für die Herstellung eines Bauteils mit vorgegebener Geometrie miteinander zu verbinden.

Es können wellenförmige, sinusförmige, mäanderförmige, kreisbogenförmige, sägezahnförmige, abwechselnd aus gekrümmten und geradlinig verlaufenden Segmenten bestehende oder trapezförmige Randkonturen ausgebildet sein. Dabei können an einer Schweißnaht auch unterschiedliche Randkonturen, die jeweilige lokale Belastung berücksichtigend, ausgebildet sein.

Vorteilhaft kann die Dicke der Bleche im Bereich der Randkontur vergrößert sein. Dies kann mittels eines als Hautfeldsockel bezeichneten Bereichs erreicht werden. Die vergrößerte Blechdicke sollte mit einer Breite um die Symmetrielinie der Fügelinie im Bereich zwischen 2,4*A und 5*A eingehalten sein. Dabei ist A die Amplitude und entspricht dem maximalen Abstand der Randkontur und demzufolge auch der Fügelinie von der Symmetrielinie der Fügelinie. Die Amplitude sollte mindestens 5mm, bevorzugt mindestens 10 mm betragen. Auf die jeweils erforderliche und günstige Amplitude und Wellenlänge der Periode hat auch die Breite der ausgebildeten Schweißnaht Einfluss. Sie können bei schmalen Schweißnähten kleiner als bei breiteren Schweißnähten gewählt werden.

Besonders vorteilhaft ist es, an miteinander zu verbindenden Blechen Hautfeldsockel auszubilden, die ebenfalls konturiert sind. So kann der von der Schweißnaht weg weisende Rand solcher Hautfeldsockel die gleiche Randkontur, wie die miteinander zu verbindenden Bleche aufweisen. Die Breite dieser Hautfeldsockel kann so entlang der Schweißnaht konstant sein. Mit einer solchen Gestaltung von Hautfeldsockeln kann die Schadenstoleranz erhöht und gleichzeitig die erforderliche Bauteilmasse nach oben begrenzt werden.

Die Vergrößerung der Blechdicke kann aber auch so vorgesehen sein, dass sie in Richtung des äußeren Randes der Randkontur kontinuierlich vergrößert ist.

Die Symmetrielinie des oszillierenden Verlaufs der Fügelinie kann sowohl geradlinig, wie auch bogenförmig gekrümmt verlaufen.

Die periodisch ausgebildete Randkontur sollte eine Wellenlänge λ aufweisen, die im Bereich von $0,1 \leq A/\lambda \leq 2$ liegt.

Die an der Schweißnaht ausgebildete Fügezone sollte eine Breite $b_{Fz}$ (Breite der Fügezone) im Bereich von 2 bis 10 mm aufweisen. Dabei soll unter Fügezone der Bereich der Schweißnaht mit beidseitig daran angrenzender Wärmeeinflusszone verstanden werden.

Zur Verstärkung können auch ein oder auch mehrere Dopplerelemente im Bereich der Schweißnaht stoffschlüssig, bevorzugt mittels Klebverbindung, mit dem Bauteil verbunden sein. Dopplerelemente können dabei aus dem Blechwerkstoff, faserverstärkten Verbundmaterialien oder anderen metallischen Werkstoffen (z.B. Titan) gebildet sein.

Ein Dopplerelement kann dabei eine Breite im Bereich 2,4*A bis 6*A aufweisen und daher die gesamte Breite der geschwungen ausgebildeten Schweißnaht vollständig überdecken.

Trapez-, Mäander- oder sägezahnförmige Randkonturen sollten keine scharfen Ecken oder Kanten aufweisen. Bereiche in denen Richtungsänderungen von 90° und darüber hinaus auftreten sollten entsprechend größere Übergangsradien aufweisen. Trapezförmige Randkonturen können in normaler Geometrie aber auch ähnlich wie "Schwalbenschwanz-Verbindungen" ausgebildet sein.

Bei einer Ausbildung mit erhöhter Blechdicke oder Hautblechsockel im Schweißnahtbereich kann die Schadenstoleranz weiter verbessert werden. Dies ist mit einer Reduzierung der Beanspruchung an der Rissspitze möglich.

Bei gleicher äußerer Belastung bewirkt eine erhöhte Blechdicke eine Reduzierung der Beanspruchung der Rissspitze.

Randkonturen und dementsprechend auch eine Fügelinie an erfindungsgemäßen Bauteilen können auch entlang der ausgebildeten Schweißnaht keine konstante Wellenlänge und/oder Amplitude aufweisen. So können Bereiche vorgesehen sein, an denen Amplitude und/oder Wellenlänge größer bzw. kleiner ist/sind als an anderen Bereichen.

Die Schweißverbindung kann durch Laserstrahl-, Elektronenstrahlschweißen oder auch durch Rührreibschweißen ausgebildet werden. Es ist eine als Stumpfstoß ausgebildete Schweißverbindung zu bevorzugen.

Bei der Ausbildung von Randkonturen sollte eine bauteil- und/oder belastungsspezifische kritische Risslänge $a_c$ berücksichtigt werden. Dabei sollte die Schweißnaht so ausgebildet sein, dass Richtungsänderungen auftreten. Wobei innerhalb der Fügezone eine geradlinig verlaufende Strecke auftritt, die nicht länger als eine maximale Länge $L_{max}$ ist.

So soll $L_{max} < a_c/s$ sein, wobei s ein Verbesserungsfaktor ist, der größer als 1,2 sein sollte. Der Verbesserungsfaktor entspricht dem Grad der Verbesserung der Schadenstoleranz gegenüber einer durchgängig geradlinigen, mit dem gleichen Fügeverfahren ausgebildeten Schweißnaht im nicht aufgedickten Blech.

Die kritische Risslänge $a_c$ in Richtung der Ermüdungsrissausbreitung kann mit

$$a_c = a_{cGW} * (K_{cFz}/K_{cGW})^2$$

bestimmt werden.

Dabei ist $K_{cFz}$ der kritische Spannungsintensitätsfaktor für das Versagen des ungünstigsten Werkstoffzustands in der Fügezone für den gegebenen Belastungsfall, $K_{cGW}$ der kritische Spannungsintensitätsfaktor für den Grundwerkstoff der Bleche für den gegebenen Belastungsfall und die $a_{cGW}$ die kritische Risslänge des Grundwerkstoffs für eine jeweilige Bauteilgeometrie und einen gegeben Belastungsfall.

Die bereits angesprochene erhöhte Dicke der Bleche im Bereich der ausgebildeten Randkonturen kann auch mit einem Hautfeldsockel erreicht werden. Dieser kann in einer Breite $b_{s1}$ (Sockelbreite) im Bereich von 2,4A bis 5A ausgebildet sein. Er kann symmetrisch entlang des jeweiligen lokalen Verlaufs der Fügelinie vorhanden sein.

Dabei sollte bei an Blechen vorhandenem Hautfeldsockel in Analogie zu $L_{max}$ eine maximale geradlinige Länge $L_{smax}$ eingehalten sein, bei der folgende Bedingung erfüllt ist:

$$L_{smax} \; < \; a_c * k/s.$$

Dabei kann für den Sockelfaktor k die Beziehung

$$k = m * [(h_s + t) t]^2$$

mit
$0,6 < m \leq 1$ als Sockelformfaktor
berücksichtigt werden.

Dabei entsprechen $h_s$ der Sockelhöhe und t der jeweiligen Blechdicke.

Eine Breite $b_{s2}$ eines Hautfeldsockels kann aber auch mit

$$1,5 * b_{FZ} \; \leq \; b_{s2} \; \leq \; 10 \; b_{FZ}$$

bestimmt werden.

Bei den erfindungsgemäß vorgesehenen Randkonturen tritt bei lokal angelegten Tangenten zumindest einmal in einer halben Periode ein Wechsel des Richtungsvektors auf. Bei sinus- oder kreisbogenförmigen Verläufen kann ein solcher Wechsel eines Richtungsvektors an nahezu jedem Punkt entlang einer Randkontur auftreten.

Mit der Erfindung kann die Schadenstoleranz verbessert, die Rissfortschrittgeschwindigkeit reduziert und außerdem eine Herauslenkung von sich ausbreitenden Rissen aus einer Schweißnaht erreicht werden. So kann eine Rissfortschrittsrate erreicht werden, die der des Grundwerkstoffs der Bleche zumindest sehr nahe kommt.

Bei erfindungsgemäßen Bauteilen kann unter einer Belastung der jeweiligen Schweißnaht ein Ermüdungsriss senkrecht zur Belastungsrichtung verlaufen. Dabei ist es unerheblich, an welcher Position ein Riss in einer Fügezone gebildet worden ist. Er kann also sowohl im Schweißnahtbereich, wie auch im Grundwerkstoff ausgebildet sein.

Bildet sich ein Riss innerhalb von Schweißnaht bzw. Fügezone aus, verläuft der Riss zuerst in Folge des reduzierten Werkstoffwiderstands darin. Aufgrund einer senkrecht zur Rissausbreitungsrichtung wirkenden Belastung wandert der Riss bis an das Ende der Grenzfläche Schweißnaht - Wärmeeinflusszone und wird dann gezwungen in den Grundwerkstoff überzutreten.

Nachfolgend soll die Erfindung beispielhaft näher erläutert werden.

Dabei zeigen:

Figur 1 zwei Zuschnitte von miteinander zu verbindenden Blechen;

Figur 1a die miteinander verbundenen Zuschnitte nach Figur 1 in einer Ansicht von oben;

Figur 2 einen Teil eines Beispiels eines erfindungsgemäßen Bauteils;

Figur 3 zwei Zuschnitte von miteinander zu verbindenden Blechen;

Figur 3a die miteinander verbundenen Zuschnitte nach Figur 3 in einer Ansicht von oben;

Figur 4 einen Teil eines weiteren Beispiels eines erfindungsgemäßen Bauteils

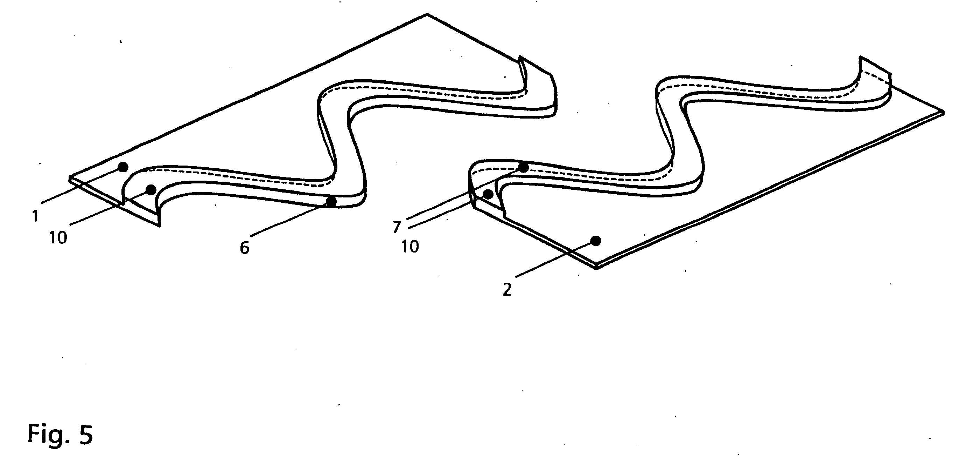

Figur 5 zwei miteinander zu verschweißende Bleche mit konturiertem Hautfeldsockel;

Figur 6 einen Teil des mit den Blechen nach Figur 5 hergestellte Bauteils

Figur 7 ein Bauteil mit einem aufgeklebten Dopplerelement;

Figur 8 eine sinusförmige Schweißnaht mit dargestellter maximal zulässiger geradliniger Strecke $L_{max}$;

Figur 9 ein Diagramm, das die Rissausbreitungsgeschwindigkeit in Abhängigkeit der erreichten Risslänge für ein erfindungsgemäßes Bauteil nach Beispiel 1 und ein herkömmlich geschweißtes Bauteil wieder gibt und

Figur 10 ein Diagramm das die Rissausbreitungsgeschwindigkeit in Abhängigkeit der erreichten Risslänge für ein erfindungsgemäßes Bauteil nach Beispiel 2 und ein herkömmlich geschweißtes Bauteil wieder gibt.

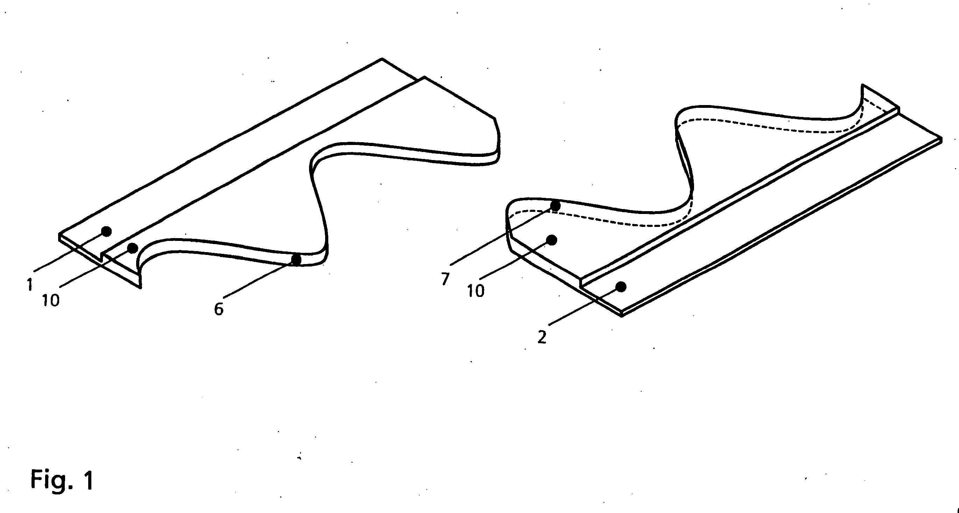

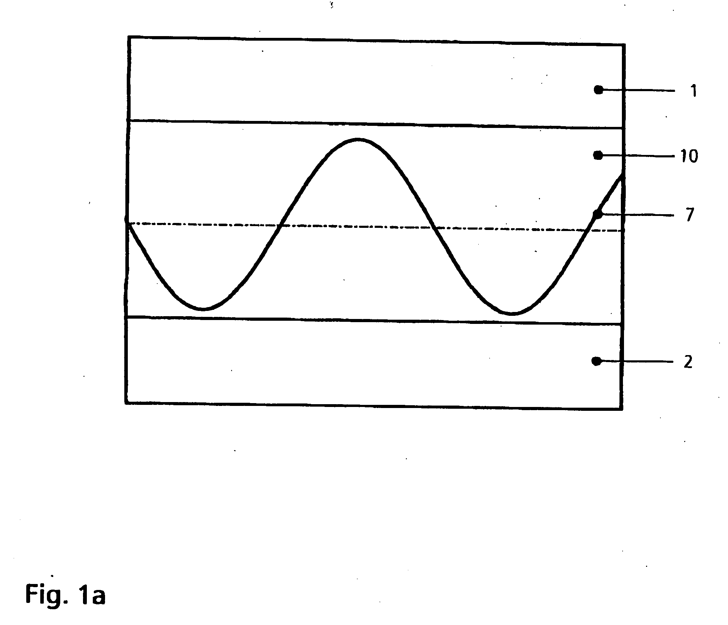

In den Figuren 1 bis 4 sind Möglichkeiten für die Ausbildung von Blechen 1 und 2, die durch eine Schweißnaht miteinander verbunden werden dargestellt.

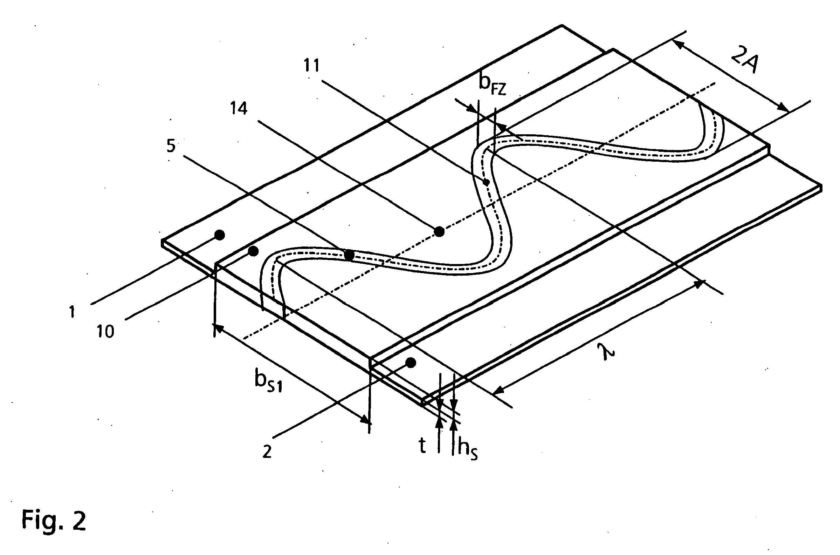

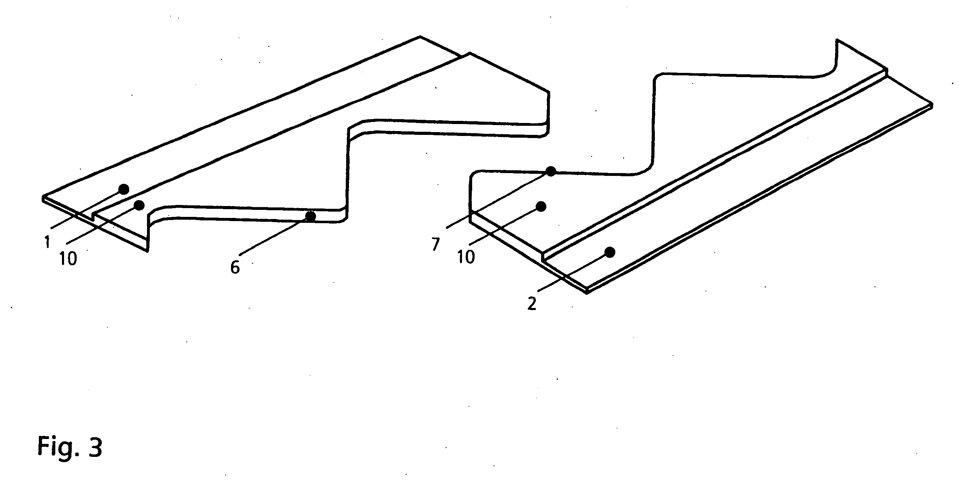

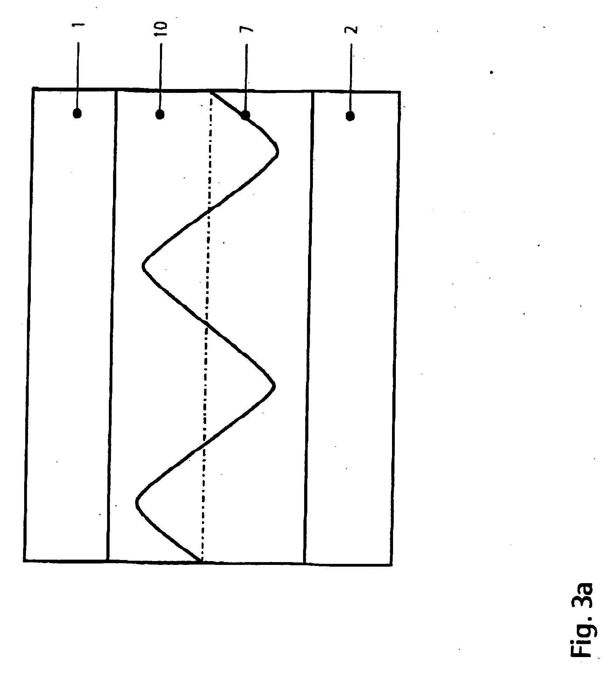

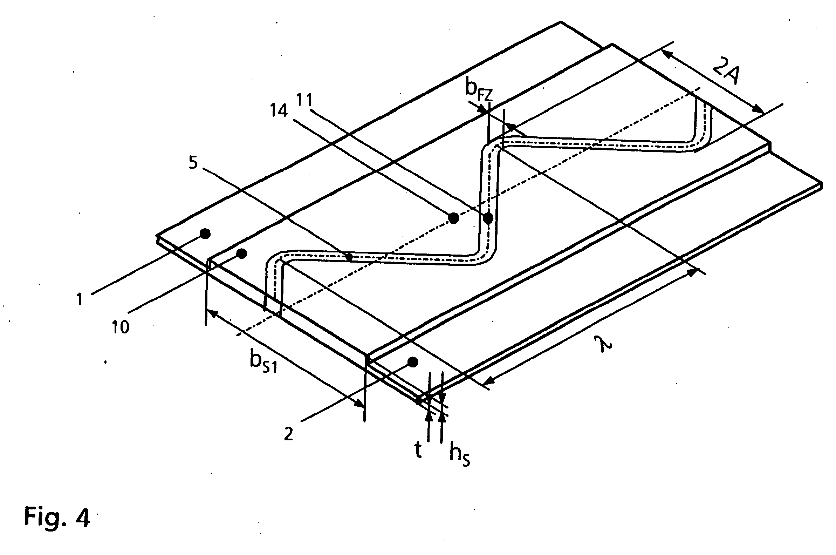

Dabei sind die Kanten der Bleche 1 und 2, die miteinander verbunden werden sollen mit einer komplementären Randkontur 6 und 7 versehen. So wurde bei dem Beispiel nach Figuren 1 und 2 eine sinusförmige Randkontur und bei dem Beispiel gemäß der Figuren 3 und 4 eine sägezahnförmige Randkontur ausgebildet.

Dies kann durch herkömmliche Bearbeitung, wie Fräsen oder Erodieren erreicht werden. Die jeweiligen Randkonturen 6 und 7 sind dabei an den Blechen 1 und 2 spiegelsymmetrisch ausgebildet.

Vor dem Schweißen werden sie ineinander geschoben, so dass die äußeren Kanten der beiden Bleche 1 und 2 in berührenden Kontakt gebracht sind. Die Verschweißung erfolgt als Stumpfstoß und es ergibt sich eine Mittellinie der Fügelinie 11, die dem Verlauf der Randkonturen folgt. Die Mittellinie der Fügelinie 11 verläuft dabei symmetrisch in Bezug zur ihrer Symmetrielinie 14, die bei diesen Beispielen geradlinig verläuft.

Bei beiden Beispielen ist ein Hautfeldsockel 10 im Bereich der Richtungsänderungen aufweisenden Schweißnaht vorhanden. Dieser ist so dimensioniert, dass er nicht nur eine größere Dicke, als die Dicke der Bleche 1 und 2 hat, sondern in Bezug zur Symmetrielinie 14 der Mittellinie der Fügelinie 11 auch eine Breite bs1 aufweist, die größer als die doppelte Amplitude A ist.

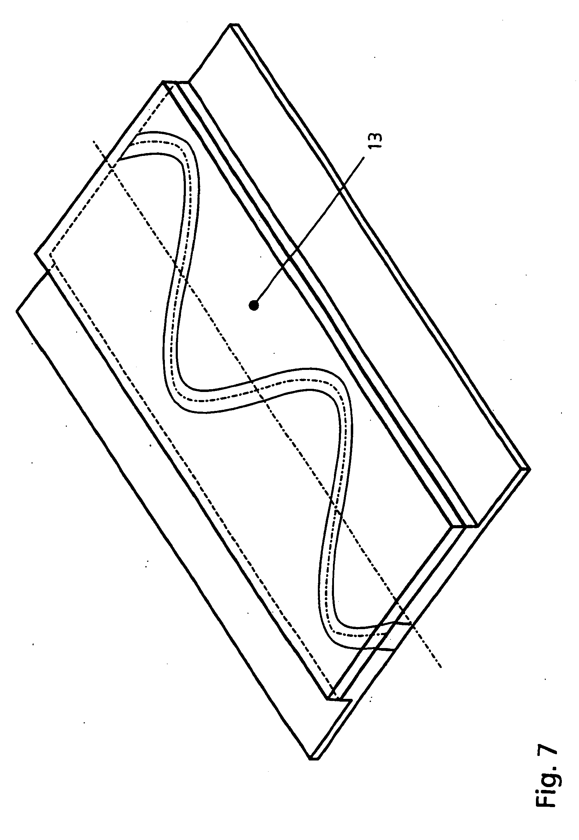

In analoger Form könnte an Stelle des Hautfeldsockels 10 auch allein oder zusätzlich auf die miteinander verbundenen Bleche an gleicher Stelle und zumindest ähnlicher Dimensionierung ein Dopplerelement 13 aufgeklebt werden, wie dies in Figur 7 gezeigt ist.

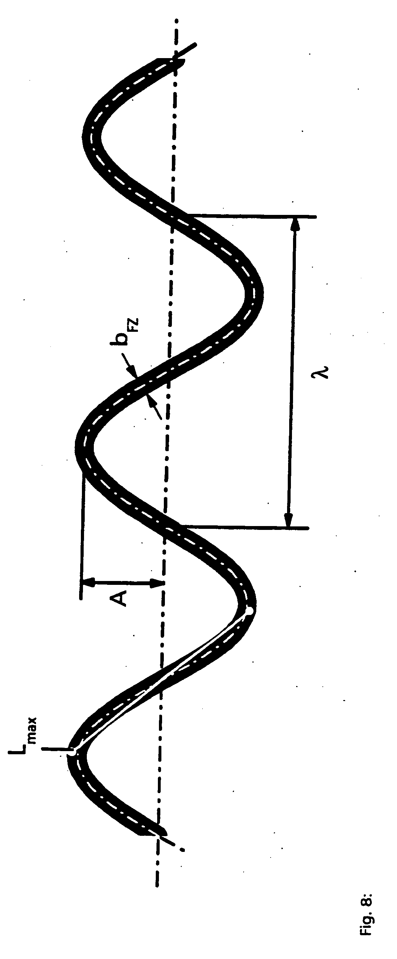

Mit Figur 8 soll verdeutlicht werden, wie eine geradlinig verlaufende Strecke mit der maximal zulässigen Länge $L_{max}$ und ggf. analog auch $L_{smax}$ auch bei gekrümmten Verläufen von Mittellinien einer Fügelinie 11 berücksichtigt werden sollte. So ist hier ein sinusförmiger Verlauf gezeigt. Die Strecke mit einer Länge $L_{max}$ liegt hier innerhalb der Fügezone 5 und wird so auch durch die jeweilige Breite der Fügezone 5 neben der Amplitude und Wellenlänge mitbestimmt.

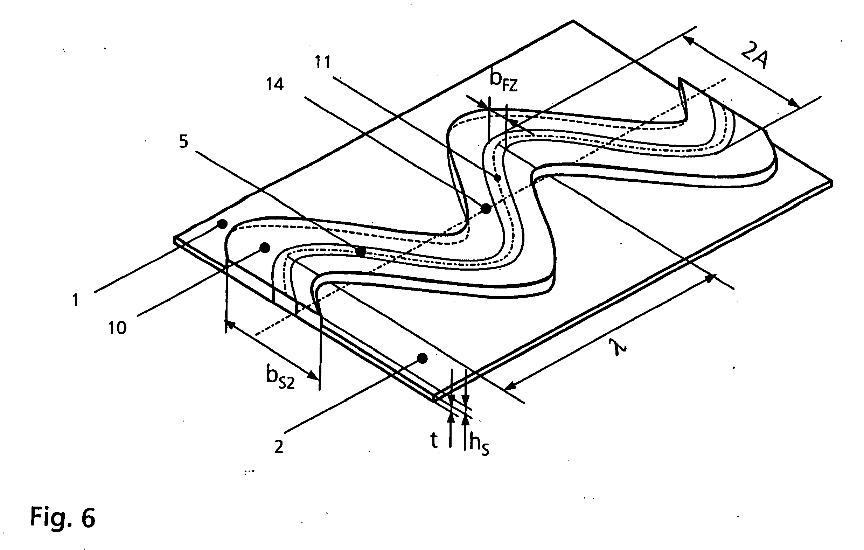

Das mit den Figuren 6 und 7 gezeigte Beispiel ist mit einem konturierten Hautfeldsockel 10 an den Blechen 1 und 2 ausgebildet. Die Geometrie der Hautfeldsockel 10 entspricht dabei der Geometrie der Randkontur 6 und 7 des jeweiligen Blechs 1 und 2. So kann die Rissfortschrittgeschwindigkeit eines Risses in der Fügezone 5 verringert und der Massezuwachs des Bauteils weitestgehend begrenzt werden.

Die Herstellung erfindungsgemäßer metallischer Bauteile soll nun mit den folgenden Ausführungsbeispielen weiter erläutert werden.

Beispiel 1

Zwei Bleche 1 und 2 aus einer schweißbaren Al-Mg-Si-Legierung mit einer Dicke t von 5,0 mm sollen durch Laserstrahlschweißen so miteinander verbunden werden, dass die Rissfortschrittsgeschwindigkeit bei zyklischer Belastung deutlich geringer ist als bei einer Laserstrahlschweißnaht und nicht wesentlich höher als die des ungeschweißten Grundwerkstoffes.

Die mit einander zu verschweißenden Ränder der beiden Bleche 1 und 2 weisen eine periodisch kreisbogenförmige Randkontur 6 und 7 auf, die komplementär ineinander greifen. Die Bögen bilden dabei jeweils einen Halbkreis mit einem Radius r von 20 mm. Dies ergibt eine Amplitude A = 20 mm und die Wellenlänge $\lambda$ = 80 mm vor.

Die mit der Randkontur 6 und 7 versehenen Bleche 1 und 2 werden stumpf aneinandergelegt und verschweißt. Das Schweißen erfolgt mittels mit einer Laserleistung von 6,0 kW und einer Schweißgeschwindigkeit von 3 m/min. Zur Vermeidung der Bildung von Heißrissen wird ein Draht mit dem Durchmesser von 0,8 mm aus einer Al-Si-Legierung als Schweißzusatzwerkstoff mit einer Drahtfördergeschwindigkeit von 6 m/min zugeführt. Als Schutzgas wird Helium eingesetzt.

Bei diesen Schweißparametern ergibt sich eine sauber ausgebildete Schweißnaht ohne Nahtfehler. Die Breite $b_{FZ}$ der Fügezone 5 beträgt 6 mm. Damit gilt 0,1 ≤ A/λ =0,25 s 2;

2 mm< $b_{Fz}$ = 6 mm≤ 10 mm.

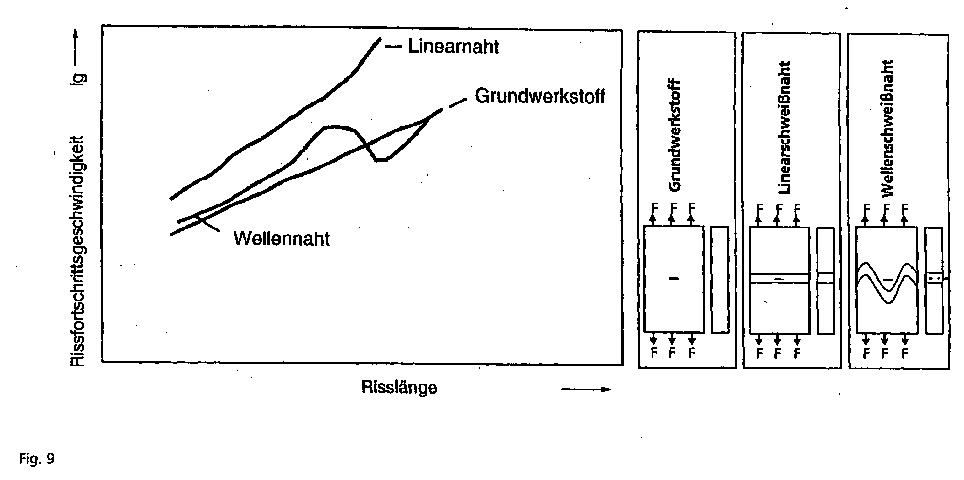

Ein so gefügtes Bauteil mit den Abmessungen 500 mm x 200 mm wird zur Ermittlung der Rissfortschrittsgeschwindigkeit schwellend einer zyklischen Hautspannung von 90 MPa bei einer Frequenz von 5 bis 8 Hz ausgesetzt. Ausgehend von einem mechanisch eingebrachten Startkerb der Anfangslänge 2a = 3 mm wird das Bauteil bis zur Bildung eines Ermüdungsrisses angeschwungen. Die sich ab einer Risslänge a = 15 mm ergebende Rissfortschrittsgeschwindigkeit da/dN (Rissfortschritt pro Schwingzyklus) ist in halblogarithmischer Darstellung in Abhängigkeit von der Risslänge in Fig. 9 dargestellt. Verglichen wird diese Abhängigkeit mit der der ungeschweißten bzw. mit einer konventionell geradlinig geschweißten Probe. Eine Probe mit linearem Nahtverlauf weist bei einer jeweiligen Risslänge 2 bis 8 mal höhere Rissfortschrittsrate als die der ungeschweißten Probe auf. Entsteht bei dem Bauteil mit dem erfindungsgemäßen kreisbogenförmigen Nahtverlauf der Anfangsriss im Grundwerkstoff, so breitet es sich mit nur geringfügig größerer Rissfortschrittsgeschwindigkeit als bei der ungeschweißten Probe aus. Bei Annäherung an die Fügezone 5 nimmt die Rissausbreitungsgeschwindigkeit bis zum Durchschreiten der Fügezone 5 zu, um danach unter die der ungeschweißten Probe abzufallen. Schließlich nähert sie sich wieder von unten dem Verlauf der ungeschweißten Probe an. Liegt der Startriss dagegen in der Fügezone 5, ist die anfängliche Rissfortschrittsgeschwindigkeit größer als bei der ungeschweißten Probe, fällt dann aber früher auch unter deren Wert ab. Damit ist gezeigt, dass mit dem erfindungsgemäßen Nahtverlauf eine entscheidende Verbesserung des Rissfortschrittsverhaltens geschweißter Bauteile möglich ist.

Beispiel 2

Die Schalen eines Unterrumpfes eines Flugzeugs sollen durch Laserstrahlschweißen miteinander verbunden werden. Das Bauteil muss schadenstolerant ausgelegt sein, ein geradliniger Schweißnahtverlauf ist entsprechend den Ergebnissen in Fig. 9 mit einer beträchtlichen Erhöhung der Rissfortschrittsgeschwindigkeit verbunden und deshalb nicht akzeptabel. Die Bleche 1 und 2 selbst hatten eine Dicke t von 2 mm und sind aus dem gleichen Al-Mg-Si-Werkstoff hergestellt, wie in Beispiel 1.

Die miteinander zu verschweißenden Bleche 1 und 2 weisen einen Hautfeldsockel 10 einer Breite $b_{s1}$ von 60 mm und einer Höhe $h_s$ von 3 mm auf. Darüber hinaus weisen sie ebenfalls eine periodisch kreisbogenförmige Randkontur 6 und 7 auf, die komplementär ineinander greift. Die Bögen bilden dabei jeweils einen Halbkreis mit einem Radius r von 20 mm. Dies gibt eine Amplitude A = 20 mm und die Wellenlänge λ = 80 mm vor.

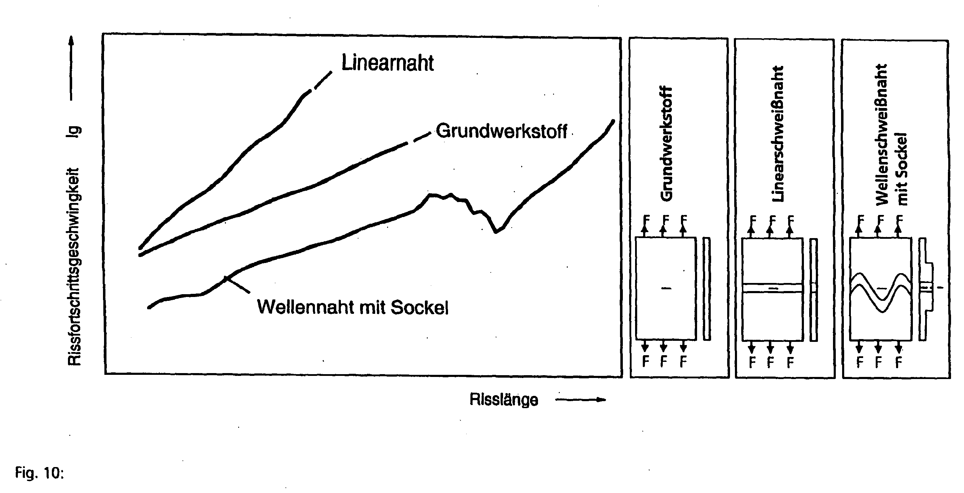

Die beiden mit Randkonturen 6 und 7 und Hautfeldsockel 10 versehenen Schalen werden mit den gleichen Schweißparametern, dem Belastungszustand und der gleichen Hautspannung wie in Beispiel 1 gefügt und geprüft. Wie in Fig. 10 dargestellt, gelingt es mit der kreisbogenförmigen Schweißnaht und dem Hautfeldsockel 10 die Rissfortschrittsgeschwindigkeit gegenüber dem ungeschweißten Zustand und dem Faktor 2 bis 4 und gegenüber der linearen Naht ohne Hautfeldsockel 10 um den Faktor 3 bis 15 zu verringern. Weiterhin wirkt sich vorteilhaft aus, dass der Gewichtszuwachs durch den Hautfeldsockel 10 geringer ist als bei einer herkömmlichen genieteten Variante.

**Patentansprüche**

1. Metallisches Flugzeugbauteil, bei dem mindestens zwei Bleche mittels einer im Stumpfstoß ausgebildeten Schweißnaht miteinander verbunden sind, bei dem die Mittellinie der Fügelinie (11) der Schweißnaht durch die äußere Randkontur (6, 7) der an der Randkontur (6, 7) miteinander verbundenen Bleche (1, 2) vorgegeben ist und **dadurch gekennzeichnet, dass** abweichend von einem durchgängig geradlinigen Verlauf, die Gesamtlänge der Schweißnaht verlängernde Richtungsänderungen periodisch an den beiden komplementär ineinander greifenden Randkonturen (6, 7) der Bleche (1, 2) vorgesehen sind.

2. Bauteil nach Anspruch 1, **dadurch gekennzeichnet, dass** die Randkontur (6, 7) der Bleche (1, 2) wellenförmig, sägezahnförmig, mäanderförmig, kreisbogenförmig, trapezförmig und/oder abwechselnd aus gekrümmten und geraden Segmenten bestehend ausgebildet ist.

3. Bauteil nach Anspruch 1 oder 2, **dadurch gekennzeichnet, dass** die Blechdicke der Bleche (1, 2) im Bereich der Randkontur (6, 7) vergrößert ist.

4. Bauteil nach Anspruch 3, **dadurch gekennzeichnet, dass** die Blechdicke um die Mittellinie der Fügelinie (11) auf eine Breite $b_{s1}$ von $2{,}4 \cdot A \leq b_{s1} \leq 5 \cdot A$ vergrößert ist.

5. Bauteil nach Anspruch 3, **dadurch gekennzeichnet, dass** die Blechdicke in Richtung des äußeren Randes mit Randkontur (6, 7) kontinuierlich vergrößert ist.

6. Bauteil nach einem der Ansprüche 3 bis 5, **dadurch gekennzeichnet, dass** die vergrößerte Dicke mit einem Hautfeldsockel (10) erreicht ist.

7. Bauteil nach einem der Ansprüche 3 bis 6, **dadurch gekennzeichnet, dass** ein Hautfeldsockel (10) mit einer an die Randkontur (6, 7) der Bleche (1, 2) angepassten geometrischen Gestalt an den Blechen (1, 2) ausgebildet ist.

8. Bauteil nach Anspruch 7, **dadurch gekennzeichnet, dass** der Hautfeldsockel (10) am jeweiligen Blech (1, 2) eine konstante Breite $b_{S2}$ aufweist.

9. Bauteil nach einem der vorhergehenden Ansprüche, **dadurch gekennzeichnet, dass** die Schweißnaht so ausgebildet ist, dass in Folge ihrer Richtungsänderungen innerhalb der Fügezone (5) eine geradlinig verlaufende Strecke mit einer Länge $L_{max}$ auftritt, die kleiner ist als der Quotient aus einer für das Bauteil spezifischen kritischen Risslänge $a_c$ und einem Verbesserungsfaktor s.

10. Bauteil nach einem der vorhergehenden Ansprüche, **dadurch gekennzeichnet, dass** bei Vorhandensein eines Hautfeldsockels (10) die Schweißnaht so ausgebildet ist, dass in Folge ihrer Richtungsänderungen innerhalb der Fügezone (5) eine geradlinig verlaufende Strekke mit einer Länge $L_{max}$ auftritt, die kleiner ist als der Quotient aus dem Produkt einer für das Bauteil spezifischen kritischen Risslänge $a_c$ mit einem Sockelfaktor k und einem Verbesserungsfaktor s.

11. Bauteil nach einem der vorhergehenden Ansprüche, **dadurch gekennzeichnet, dass** zur Verstärkung im Bereich der Schweißnaht ein Dopplerelement (13) stoffschlüssig mit den Blechen (1, 2) verbunden ist.

12. Bauteil nach einem der vorhergehenden Ansprüche, **dadurch gekennzeichnet, dass** die periodisch ausgebildete Randkontur (6, 7) in Bezug zur Symmetrielinie (14) der Mittellinie der Fügelinie (11) eine Amplitude A ≥ 5 mm aufweist.

13. Bauteil nach einem der vorhergehenden Ansprüche, **dadurch gekennzeichnet, dass** die periodisch ausgebildete Randkontur (6, 7) eine Wellenlänge A im Bereich $0{,}1 \leq A/\lambda \leq 2$ aufweist.

14. Bauteil nach einem der vorhergehenden Ansprüche, **dadurch gekennzeichnet, dass** die Schweißnaht mit einer Fügezone (5), deren Breite $b_{Fz}$ im Bereich von 2 bis 10 mm liegt, ausgebildet ist.

**15.** Bauteil nach Anspruch 11, **dadurch gekennzeichnet, dass** die Breite eines Dopplerelements (13) im Bereich 2,4*A bis 6*A gewählt ist.

**16.** Bauteil nach einem der vorhergehenden Ansprüche, **dadurch gekennzeichnet**, das die Symmetrielinie (14) der Mittellinie der Fügelinie (11) zumindest bereichsweise einen von einer Geraden abweichenden Verlauf aufweist.

**17.** Bauteil nach einem der vorhergehenden Ansprüche, **dadurch gekennzeichnet, dass** die Amplitude A und/oder die Wellenlänge $\lambda$ der periodisch ausgebildeten Randkontur (6, 7) entlang der Symmetrielinie (14) der Mittellinie der Fügelinie (11) verändert ist.

**Claims**

**1.** Metallic aircraft structural component, wherein at least two metal sheets are connected to one another by means of a weld seam formed as a butt joint, wherein the centre line of the join line (11) of the weld seam is predetermined by the outer edge contour (6, 7) of the metal sheets (1, 2) connected to one another at the edge contour (6, 7) and **characterised in that**, deviating from a continuously straight-line course, changes in direction increasing the total length of the weld seam are provided periodically at the two edge contours (6, 7) of the metal sheets (1, 2) engaging in one another in a complementary manner.

**2.** Structural component according to Claim 1, **characterised in that** the edge contour (6, 7) of the metal sheets (1, 2) is formed so as to be wave-shaped, sawtooth-shaped, meander-shaped, circular-arc-shaped, trapezoidal and/or comprise alternately curved and straight segments.

**3.** Structural component according to Claim 1 or 2, **characterised in that** the metal sheet thickness of the metal sheets (1, 2) is increased in the region of the edge contour (6, 7).

**4.** Structural component according to Claim 3, **characterised in that** the metal sheet thickness is increased around the centre line of the join line (11) to a width $b_{s1}$ of 2.4*A $\leq b_{s1} \leq$ 5*A.

**5.** Structural component according to Claim 3, **characterised in that** the metal sheet thickness is continuously increased in the direction of the outer edge with edge contour (6, 7).

**6.** Structural component according to one of Claims 3 to 5, **characterised in that** the increased thickness is achieved with a skin panel base (10).

**7.** Structural component according to one of Claims 3 to 6, **characterised in that** a skin panel base (10) is formed on the metal sheets (1, 2) with a geometrical design matched to the edge contour (6, 7) of the metal sheets (1, 2).

**8.** Structural component according to Claim 7, **characterised in that** the skin panel base (10) on the respective metal sheet (1, 2) has a constant width $b_{s2}$.

**9.** Structural component according to one of the preceding claims, **characterised in that** the weld seam is formed such that, as a result of its changes in direction within the join zone (5), a section extending in a straight line with a length $L_{max}$ occurs which is smaller than the quotient of a critical crack length $a_c$, specific to the structural component, and an improvement factor s.

**10.** Structural component according to one of the preceding claims, **characterised in that** when a skin panel base (10) is present, the weld seam is formed such that, as a result of its changes in direction within the join zone (5), a section extending in a straight line with a length $L_{max}$ occurs which is smaller than the quotient of the product of a critical crack length $a_c$, specific to the structural component and with a base factor k, and an improvement factor s.

**11.** Structural component according to one of the preceding claims, **characterised in that** a doubler element (13) is connected in a materially bonded manner to the metal sheets (1, 2) for reinforcement in the region of the weld seam.

**12.** Structural component according to one of the preceding claims, **characterised in that** the periodically formed edge contour (6, 7) has an amplitude A $\geq$ 5 mm with respect to the line of symmetry (14) of the centre line of the join line (11).

**13.** Structural component according to one of the preceding claims, **characterised in that** the periodically formed edge contour (6, 7) has a wavelength $\lambda$ in the range from 0.1 $\leq$ A/$\lambda$ $\leq$ 2.

**14.** Structural component according to one of the preceding claims, **characterised in that** the weld seam is formed with a join zone (5) having a width $b_{Fz}$ in the range from 2 to 10 mm.

**15.** Structural component according to Claim 11, **characterised in that** the width of a doubler element (13) is chosen in the range from 2.4*A to 6*A.

**16.** Structural component according to one of the preceding claims, **characterised in that** the line of symmetry (14) of the centre line of the join line (11) has a course deviating from a straight line at least in certain regions.

17. Structural component according to one of the preceding claims, **characterised in that** the amplitude A and/or the wavelength λ of the periodically formed edge contour (6, 7) is varied along the line of symmetry (14) of the centre line of the join line (11).

## Revendications

1. Composant métallique d'avion, dans lequel au moins deux tôles sont raccordées l'une à l'autre au moyen d'un cordon de soudage réalisé par raboutage bout à bout, dans lequel la médiane de la ligne de jonction (11) du cordon de soudage est prédéfinie par le contour marginal extérieur (6, 7) des tôles (1, 2) raccordées l'une à l'autre sur le contour marginal (6, 7) et **caractérisé en ce qu'**à la différence d'un tracé généralement linéaire, il est prévu périodiquement des variations de direction prolongeant la longueur totale du cordon de soudage sur les deux contours marginaux (6, 7) des tôles (1, 2) s'emboîtant l'une dans l'autre de manière complémentaire.

2. Composant selon la revendication 1, **caractérisé en ce que** le contour marginal (6, 7) des tôles (1, 2) est conformé en ondulations, en dents de scie, en méandres, en arcs de cercle, en trapèze et/ou en alternance de segments incurvés et droits.

3. Composant selon la revendication 1 ou 2, **caractérisé en ce que** l'épaisseur des tôles (1, 2) est renforcée dans la zone du contour marginal (6, 7).

4. Composant selon la revendication 3, **caractérisé en ce que** l'épaisseur de tôle est renforcée autour de la médiane de la ligne de jonction (11) sur une largeur $b_{s1}$ de $2,4*A \leq b_{s1} \leq 5*A$.

5. Composant selon la revendication 3, **caractérisé en ce que** l'épaisseur de tôle est renforcée en continu dans la direction du bord extérieur avec un contour marginal (6, 7).

6. Composant selon l'une quelconque des revendications 3 à 5, **caractérisé en ce que** l'épaisseur renforcée est atteinte avec une semelle superficielle (10).

7. Composant selon l'une quelconque des revendications 3 à 6, **caractérisé en ce qu'**une semelle superficielle (10) est formé sur les tôles (1, 2) avec une configuration géométrique adaptée au contour marginal (6, 7) des tôles (1, 2).

8. Composant selon la revendication 7, **caractérisé en ce que** la semelle superficielle (10) présente sur la tôle respective (1, 2) une largeur constante $b_{s2}$.

9. Composant selon l'une quelconque des revendications précédentes, **caractérisé en ce que** le cordon de soudage est formé de manière à faire apparaître, à la suite de ses variations de direction dans la zone de jonction (5), un segment s'étendant en ligne droite sur une longueur $L_{max}$, qui est inférieure au rapport entre une longueur de fissure critique $a_c$ spécifique au composant et un facteur de renforcement s.

10. Composant selon l'une quelconque des revendications précédentes, **caractérisé en ce qu'**en présence d'une semelle superficielle(10), le cordon de soudage est formé de manière à faire apparaître, à la suite de ses variations de direction dans la zone de jonction (5), un segment s'étendant en ligne droite sur une longueur $L_{max}$, qui est inférieure au rapport entre le produit d'une longueur de fissure critique $a_c$ spécifique au composant et un facteur de socle k et un facteur de renforcement s.

11. Composant selon l'une quelconque des revendications précédentes, **caractérisé en ce que**, pour renforcer dans la zone du cordon de soudage, un élément Doppler (13) est raccordé aux tôles (1, 2) par assemblage matériel.

12. Composant selon l'une quelconque des revendications précédentes, **caractérisé en ce que** le contour marginal (6, 7) formé périodiquement présente une amplitude $A \geq 5$ mm par rapport à la ligne de symétrie (14) de la médiane de la ligne de jonction (11).

13. Composant selon l'une quelconque des revendications précédentes, **caractérisé en ce que** le contour marginal (6, 7) formé périodiquement présente une longueur d'onde λ dans la plage de $0,1 \leq A/\lambda \leq 2$.

14. Composant selon l'une quelconque des revendications précédentes, **caractérisé en ce que** le cordon de soudage est formé avec une zone de jonction (5), dont la largeur $b_{Fz}$ se situe dans la plage de 2 à 10 mm.

15. Composant selon la revendication 11, **caractérisé en ce que** la largeur d'un élément Doppler (13) est choisie dans la plage de 2,4*A à 6*A.

16. Composant selon l'une quelconque des revendications précédentes, **caractérisé en ce que** la ligne de symétrie (14) de la médiane de la ligne de jonction (11) présente au moins par zones un tracé différant d'une droite.

17. Composant selon l'une quelconque des revendications précédentes, **caractérisé en ce que** l'amplitude A et/ou la longueur d'onde λ du contour marginal (6, 7) réalisé périodiquement est/sont modifiée(s) le long de la ligne de symétrie (14) de la médiane de la ligne de jonction (11).

Fig. 1

Fig. 1a

Fig. 2

Fig. 3

Fig. 3a

14

Fig. 4

Fig. 5

Fig. 6

Fig. 7

Fig. 8:

Fig. 9

Fig. 10:

**IN DER BESCHREIBUNG AUFGEFÜHRTE DOKUMENTE**

**In der Beschreibung aufgeführte Patentdokumente**

- EP 1081042 A

- DE 10009305 A1